# EUROPÄISCHE PATENTSCHRIFT

(11) **EP 4 066 700 B1**
(45) Veröffentlichungstag und Bekanntmachung des Hinweises auf die Patenterteilung: **26.02.2025**
(21) Anmeldenummer: 21165867.9
(22) Anmeldetag: 30.03.2021
(51) Int. Cl.: A47J 31/44, A47J 31/60

(54) **VERFAHREN UND VORRICHTUNG ZUM ERZEUGEN VON TEMPERIERTEM MILCHSCHAUM UND/ODER MILCH**
METHOD AND DEVICE FOR PRODUCING TEMPERED MILK FROTH AND / OR MILK
PROCÉDÉ ET DISPOSITIF DE PRODUCTION DE MOUSSE DE LAIT ET/OU DE LAIT MIS EN TEMPÉRATURE

(43) Veröffentlichungstag der Anmeldung: 05.10.2022
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 3 610 762
- DE-A1- 102017 123 642
- US-A1- 2019 000 263

## Beschreibung

### Technisches Gebiet

Die vorliegende Erfindung betrifft ein Verfahren und eine Vorrichtung zum Erzeugen von temperiertem Milchschaum und/oder Milch, insbesondere zum Erzeugen wahlweise von kaltem, warmem oder heissem Milchschaum oder Milch.

### Stand der Technik

Verfahren und Vorrichtungen zum Erzeugen wahlweise von kalter, warmer oder heisser Milch und/oder Milchschaum sind insbesondere in Kombination mit Getränkebereitern, z.B. Kaffeemaschinen, bekannt. Je nach gewählter Getränke- und/oder Kaffeespezialität, z.B. Cappuccino, Latte Macchiato, Café Latte, Schokolade oder Chai, variiert die Menge aber auch die Temperatur der bereitgestellten Milch und/oder des bereitgestellten Milchschaums. Zur Erzeugung von Milchschaum wird im Allgemeinen Milch aus einem Behälter mittels einer Pumpe angesaugt und während eines Strömungswegs zu einem Auslass mit zugeführter Luft oder Gas gemischt, um dann als Milch-/Luftgemisch in einer Heizeinheit auf eine bestimmbare Temperatur temperiert und zu einem Schaum aufbereitet zu werden. Aus Gründen der Haltbarkeit und der Hygiene wird die Milch kühl gelagert, insbesondere bei Temperaturen zwischen 3°C und 7°C. Das Heizelement, in welcher die Milch bzw. der Milchschaum temperiert und eventuell erzeugt wird, kann ein Durchlauferhitzer sein, für welchen unterschiedliche Typen geeignet sind.

Allgemein gibt es verschiedene Arten, um Milchschaum zu erzeugen. So kann in einer Schaumeinheit Luft, Gas oder auch heisser Dampf mit der Milch derart gemischt werden, dass durch erzeugte Turbulenzen die Milch aufschäumt und einen mehr oder weniger stabilen Schaum bildet. Das Aufschäumen kann aber auch durch mechanisches Rühren oder mittels einer Drosseleinrichtung erfolgen.

In bekannten Verfahren und Vorrichtungen ist häufig vorgesehen, dass je nach gewählter Temperatur für die Milch und das Milch-/Luftgemisch bzw. dem Milchschaum unterschiedliche Strömungswege, häufig parallel verlaufend, vorgesehen sind. Kalte Milch wird über einen ersten Strömungsweg zum Auslass gefördert, während warme Milch über einen zweiten Strömungsweg geführt wird, in dem insbesondere ein Durchlaufheizelement angeordnet ist. Diese parallelen Strömungswege bedeuten aber nicht nur ein aufwändiges Leitungssystem und eine Vielzahl von schaltbaren Komponenten, sondern stellen auch hinsichtlich Kontamination und Bakterienwachstum sowie für eine Reinigung ein Problem dar.

Bekannte Systeme mit nur einer einzelnen Milchleitung sehen vor, dass unabhängig welche Temperatur in der Milch, Milch-Luftgemisch oder Milchschaum einzustellen ist, stets ein Heizelement zu passieren ist. Nachteilig erweist sich ein derartiges System, dass wenn kalte Milch oder kalter Milchschaum unmittelbar nach Abgabe heisser Milch oder heissen Milchschaums bereitgestellt werden soll, bei Passieren auch eines ausgeschalteten Heizelements die kalte Milch oder der kalte Milchschaum durch die Restwärme des Heizelements erwärmt wird. Demnach ist bekannt, das ausgeschaltete Durchlaufheizelement durch nachströmende kalte Milch oder nachströmende Spülflüssigkeit zumindest teilweise zu kühlen und eventuell darüber hinaus zu reinigen.

Aus WO 2017/155403 ist eine Anordnung zur Herstellung von heissem oder kaltem Milchschaum bekannt, welche relativ kurz hintereinander zur Verfügung gestellt werden können. Hierbei ist vorgesehen, dass eine Durchflussheizeinheit in einen aktiven und einen inaktiven Zustand schaltbar ist. Die Durchflussheizeinheit ist als Dickschichtheizung mit einer kleinen thermischen Masse ausgebildet. Die Dickschichtheizung wird hinsichtlich ihres thermischen Verhaltens präzise definiert, um so der thermischen Trägheit unmittelbar nach Ein- bzw. Ausschalten der Dickschichtheizung Rechnung zu tragen. Dabei wird insbesondere das thermische Verhalten unmittelbar nach dem Ausschalten definiert, d.h. wenn nach der Herstellung von warmem bzw. heissem Milchschaum bei eingeschalteter Heizeinheit diese abgeschaltet wird, um unmittelbar anschliessend kalten bzw. nur wenig erwärmten Milchschaum bereitzustellen. Die Dickschichtheizung ist demnach eingerichtet, dass in einem Fluidkanal der Dickschichtheizung eine kleine Milchmenge von ca. 40 bis 60 ml im aufgeschäumten Zustand und mit einer Temperatur von weniger ca. 7°C an einem Fluideinlass einer umfassten Milchleitung beim Durchströmen der seit weniger als 10s inaktiven Durchflussheizeinheit bis auf eine Temperatur von unter 20°C erwärmt wird. Demnach kann bei einem ersten Bezug tatsächlich kein Kaltgetränk bereitgestellt werden, da hierfür die Temperatur < 10°C, insbesondere ≤ 7°C liegen sollte. Aber auch wenn eine grössere Milchmenge von 60 bis 80 ml zur Herstellung eines Getränks benötigt wird, ist in der Regel der Erstbezug zu warm und erst beim zweiten Bezug kann ein Kaltgetränk bereitgestellt werden. Demnach ist ein Wechsel zwischen einem Heissgetränk und einem Kaltgetränk häufig nur mit einer umfangreichen Spülung mit kalter Milch erreichbar, welches das System unrentabel und hinsichtlich der Bildung einer Milchhaut problematisch machen kann.

Aus EP 3 610 762 A1 ist eine Vorrichtung zur Aufbereitung von Milch mit einem integrierten Spülsystem bekannt, wobei umfasst sind eine Pumpe, ein Leitungssystem, welches umfasst eine Milchansaugleitung, eine Auslassleitung und eine Spülleitung, über welche die Milchansaugleitung und zumindest teilweise eine Luftzufuhrleitung mit einer Spülflüssigkeit beaufschlagbar ist, sowie ein Luftmengenregler in der Luftzufuhrleitung mit einem ersten und einem zweiten Rückschlagventil, um dosierbar Luft in die Milchansaugleitung einzuleiten und eine Dickschichtheizung, die in der Auslassleitung angeordnet ist.

Im Allgemeinen erhitzt sich mit Einschalteten einer als Dickschichtheizung ausgebildeten Durchflussheizeinheit zunächst die Heizeinheit bevor dann mit einer gewissen Verzögerung auch die gewünschte Temperatur in dem umfassten Fluidkanal erreicht ist. Diese Temperatur ist für die Erwärmung des in dem Fluidkanal strömenden Milchschaums massgeblich. Auch wenn die Dickschichtheizung eine kleine thermische Masse und ein steiles Heizprofil aufweisen sollte, so folgt die Erwärmung des Milchschaums gemäss einer flachen Aufheizkurve, d.h. Aufheiz- und Abkühlphase sind mit einer gewissen zeitlichen und/oder thermischen Verzögerung behaftet. Bei einem sogenannten überschwingenden Heizsystem kann es während der Aufheizphase zu einer örtlichen Überhitzung kommen, was für Lebensmittel und der bei Überhitzung sich bildenden Ablagerungen in dem Fluidkanal in vielfältiger Weise nachteilig ist.

Als Dickschichtheizung ausgebildete Durchflussheizeinheiten zur Erzeugung von temperiertem Milchschaum sind bereits bekannt. Eine Dickschichtheizung ist im allgemeinen ein Schichtverbund, umfassend ein Trägersubstrat, z.B. ein Metallelement belegt mit einer dielektrischen Beschichtung, z.B. einer Glaskeramikschicht, die einerseits als Isolator fungiert und andererseits Leiterbahnen aus einem elektrisch leitenden Material trägt, welche im aktivierten Zustand Wärme erzeugen. Die erzeugte Wärme kann auf ein Fluid übertragen werden, welches in einem an der Dickschichtheizung ausgebildeten beispielsweise mäanderförmigen oder spiralförmigen Fluidkanal strömt. Insbesondere können Grösse, Form und/oder elektrische Eigenschaften der Dickschichtheizung auf die jeweilige Aufgabe bzw. den Einsatzort angepasst werden. Zusätzlich können Temperatursensoren und weiteres integriert werden. Dickschichtheizungen zeichnen sich durch ein steiles Temperaturprofil bzw. Heizprofil und damit durch ein sehr schnelles und kurzes Ansprechverhalten aus, so dass eine Dickschichtheizung vor allem nicht in einem Stand-by-Modus eingesetzt wird.

### Zusammenfassung der Erfindung

Im Gegensatz zu den bekannten Verfahren und Vorrichtungen wird erfindungsgemäss die Erzeugung wahlweise von kalter, warmer oder heisser Milch bzw. Milchschaum mit einem einfachen Ablauf des Verfahrens und einem einfachen Aufbau der Vorrichtung, d.h. ohne parallele Strömungswege und aufwendiger Schaltung von Komponenten, sowie ohne eine Verzögerung durch selektives Ein- bzw. Ausschalten einer Heizeinheit erreicht.

Die Lösung der Aufgaben ergibt sich aus den Merkmalen der unabhängigen Ansprüche. Vorteilhafte Weiterentwicklungen der Erfindungen ergeben sich aus den abhängigen Ansprüchen und den Figuren.

Das erfindungsgemässe Verfahren zum Erzeugen wahlweise von kaltem, warmem oder heissem Milchschaum und/oder Milch umfasst die folgenden Schritte:
▪ Bereitstellen mindestens eines Behälters zum Bevorraten einer zu schäumenden Milch;
▪ Bereitstellen eines Fluids und einer Fluidleitung;
▪ Fördern einer vorbestimmbaren Menge der zu schäumenden Milch mittels einer Pumpe durch ein Leitungssystem, welches eine Milchansaugleitung zwischen dem mindestens einen Behälter und der Pumpe und eine einzelne Auslassleitung zwischen Pumpe und mindestens einem Auslass umfasst;
▪ Eventuelles Zuführen von Luft über einen Luftmengenregler in die Milchansaugleitung zum Erzeugen eines Milch-/Luftgemisches stromaufwärts der Pumpe;
▪ Fördern des Milch-/Luftgemisches oder der Milch durch ein als Durchlauferhitzer ausgebildetes Heizelement, welches in der Auslassleitung angeordnet und als Dickschichtheizung ausgebildet ist; und
▪ Abgeben des Milchschaums oder der Milch an dem mindestens einen Auslass.

Das Verfahren zeichnet sich dadurch aus, dass die Dickschichtheizung permanent auf eine vorbestimmbare Temperatur aufgeheizt ist, und nach jeder Abgabe des Milchschaums oder der Milch das Leitungssystem mit dem Fluid zumindest teilweise beaufschlagt ist. Insbesondere kann das ausserhalb eines Kühlbereichs befindliche System beaufschlagt werden. Hierbei eignet sich als Fluid Wasser, insbesondere gefiltertes Wasser.

Überraschend hat sich gezeigt, dass im Gegensatz zu den bekannten Verfahren zur Erzeugung wahlweise von kaltem, warmem oder heissem Milchschaum mit nur einem einzigen Strömungsweg stromabwärts der Pumpe, d.h. einem einfachen Leitungssystem, der Stand-by-Modus eines als Dickschichtheizung ausgebildeten Durchlauferhitzers sehr vorteilhaft ist. Dies steht im Gegensatz zu der herkömmlichen Betriebsweise von als Dickschichtheizung ausgebildeten Durchlauferhitzern. Diese sind gerade eingerichtet, um eine träge und längere Ansprechzeit beim Umschalten zwischen aktivem und inaktivem Zustand und damit einen Stand-by-Modus zu vermeiden. Der Stand-by-Modus bedeutet, dass die Dickschichtheizung permanent auf einer vorbestimmbaren Temperatur temperiert ist, wenn die Vorrichtung zur Erzeugung temperierten Milchschaums bzw. von Milch im Betrieb ist.

Vorteilhaft ist, dass im Stand-by-Modus, d.h. im aktiven Zustand einer schaltbaren Heizeinheit, im Falle einer weiteren Temperaturerhöhung die Aufheizphase deutlich verkürzt und verlässlicher ist als im Falle einer ausgeschalteten und abgekühlten Heizeinheit. Darüber hinaus kann eine zeitliche Verzögerung bei der Einstellung der Temperatur im Fluidkanal weitgehend vermieden werden. Zwar ist auch bei als Dickschichtheizung ausgebildeten Heizeinheiten mit kleiner thermischer Masse und sehr steilem Heizprofil die Aufheizphase verkürzt, es dauert aber doch eine gewisse Zeit bis das strömende Fluid auf die gewünschte Temperatur aufgeheizt ist. Insbesondere erweist sich dies als nachteilig, wenn die Milch oder der Milchschaum nur in kleinen Mengen erwärmt werden soll. So werden für bestimmte Kaffeespezialitäten nur kleine Mengen an temperierter Milch bzw. Milchschaum benötigt, so dass letztlich bedingt durch ein verzögertes Aufheizen die erforderliche Temperatur der kleinen Menge an Milch bzw. Milchschaum nicht erreicht wird. Ein kleiner Cappuccino mit etwa 80 ml Milchschaum oder ein sogenannter Cortado mit noch geringerer Milchschaummenge könnte aufgrund dessen letztlich zu kalt sein. Eine träge und längere Ansprechzeit der zur Erwärmung von Milch und/oder Milchschaum eingesetzten Heizeinheit ist bei kleinen Mengen von zu temperierendem Milchschaum bzw. Milch besonders nachteilig.

Gemäss einer Ausführungsform des Verfahrens ist vorgesehen, dass erst vor einer Abgabe an Milchschaum und/oder Milch an dem dafür vorgesehenen mindestens einen Auslass das Fluid, vorzugsweise Wasser, aus dem Leitungssystem über ein Mehrwegeventil ausgeleitet wird. Demnach ist zwischen zwei Abgaben an Milchschaum und/oder Milch das Leitungssystem und insbesondere das als Dickschichtheizung ausgebildete Heizelement mit dem Fluid beaufschlagt. Dies erweist sich in vielfältiger Weise als vorteilhaft, wie dies noch erläutert wird.

Gemäss der Erfindung verbleibt das als Dickschichtheizung ausgebildete Heizelement permanent in einem aktiven Zustand und wird demnach nicht je nach Bedarf ein- bzw. ausgeschaltet. Vorzugsweise ist die Dickschichtheizung auf eine Temperatur zwischen 60°C und 70°C erwärmt. Demnach liegt auch in dem in der Dickschichtheizung vorgesehenen Fluidkanal permanent eine entsprechende hohe Temperatur vor.

Im Falle, dass zur Erzeugung von heissem Milchschaum oder heisser Milch die Temperatur der Dickschichtheizung weiter erhöht werden muss, muss diese nur um eine verhältnismässig kleine Temperaturdifferenz erhöht werden. Diese Temperaturdifferenz kann, beispielsweise etwa 4°C bis 7°C betragen. Diese kleine Temperaturdifferenz gemäss einer bevorzugten Ausführungsform kann schnell und sicher überwunden werden. Eine örtliche Überhitzung, bedingt durch ein Überschwingen in der Regelung der Heizeinheit und somit der Temperatur der Dickschichtheizung, kann durch die kleine zu überwindende Temperaturdifferenz vermieden werden.

Gemäss der Erfindung kann zur Erzeugung von temperiertem Milchschaum und/oder Milch insbesondere gekühlte Milch mit einer Temperatur von 3°C bis 7°C über die Milchansaugleitung mittels der Pumpe durch das Leitungssystem gefördert werden. Um eine Temperatur des Milchschaums und/oder der Milch an einer Abgabestelle bzw. dem Auslass von ca. 64°C bis 68°C zu erreichen, wobei auch eine Abkühlung des geförderten Milchschaums bzw. der Milch auf dem Strömungsweg zur Abgabestelle zu berücksichtigen ist, sollte die Temperatur des Heizelements in etwa 70°C bis 75°C betragen.

Bisher waren Systeme bekannt, bei denen ein als Dickschichtheizung ausgebildetes Heizelement für die Temperierung des Milchschaums bzw. der Milch von einem deaktivierten bzw. ausgeschalteten Zustand in einen aktiviert bzw. eingeschaltet Zustand geschaltet werden musste, wobei sich das Heizelement gemäss eines Heizprofils, von einer tiefen Temperatur ausgehend, aufheizt. Während dieser Aufheizphase kann es zu einer örtlichen Überhitzung kommen. Dies kann bei an sich bekannten Heizeinheiten beobachtet werden, wobei nach einer sprunghaften Änderung einer Eingangsgrösse eine Ausgangsgrösse zunächst einen Sollwert überschreitet und sich erst dann der gewünschte Wert dieser Ausgangsgrösse einstellt. So kann sich beim Einschalten und Aufheizen einer Dickschichtheizung die Temperatur kurzfristig über die tatsächlich eingestellte Temperatur hinaus erhöhen, wodurch eine örtliche Überhitzung auftreten kann. Diese Überhitzung wirkt sich negativ auf den zu temperierenden Milchschaum oder die zu erwärmende Milch aus, insbesondere wenn es zu entsprechenden Denaturierungserscheinungen der Milchproteine und dadurch bedingt zu Ablagerungen kommt.

Die gemäss einer Ausführungsform vorgesehene Beaufschlagung des Leitungssystems mit Fluid, z.B. Leitungswasser, nach jeder Abgabe von Milchschaum und/oder Milch kann je nach Temperatur des insbesondere in die Milchansaugleitung zugeführten Fluids zumindest Abschnitte des Leitungssystem und die daran angeordneten Komponenten kühlen oder erwärmen. Aber auch unabhängig von der Temperatur des zuführbaren Fluids erwärmt sich dieses durch die von dem Heizelement übertragbare Wärme, so dass auch zumindest Abschnitte des Leitungssystems, insbesondere die Auslassleitung und der mindestens eine Auslass selbst, erwärmt werden. Erwärmte Leitungsabschnitte und daran angeordnete Komponenten erweisen sich als ausgesprochen vorteilhaft, um den in dem Heizelement erwärmten Milchschaum oder die erwärmte Milch ohne eine nennenswerte Abkühlung an dem mindestens einen Auslass zur Verfügung stellen zu können.

Wird dagegen kalter Milchschaum oder kalte Milch beispielsweise von einem Benutzer angefordert, so sieht das Verfahren gemäss einer Ausführungsform der Erfindung vor, dass das Leitungssystem und das als Dickschichtheizung ausgebildete Heizelement mit Fluid gespült werden, so dass die Dickschichtheizung durch das strömende Fluid in einem Zeitraum von > 10 s auf eine Temperatur vorzugsweise entsprechend der Kühltemperatur in der Kühleinrichtung, d.h. auf ≤ 7°C gekühlt wird. Insbesondere kann angestrebt werden, dass auf eine Temperatur ≤ 4°C gekühlt wird, um eine Erwärmung während des Strömungsweges und den daran angeordneten Elementen weitgehend zu kompensieren. In einer Ausführungsform wird als Fluid Wasser eingesetzt, welches beispielsweise durch ein kommunales Versorgungsnetz bereitgestellt werden kann. Dabei ist zu beachten, dass das sogenannte Leitungswasser in Abhängigkeit von der Umgebung und der Saison unterschiedliche Temperaturen hat, welche auch als Wassereinlauftemperatur bezeichnet wird. So kann diese Temperatur des Leitungswasser je nach Jahreszeit zwischen 10°C und 25°C liegen.

In einer bevorzugten Ausführungsform kann das Fluid, z.B. das über das Versorgungsnetz bereitgestellte Leitungswasser, mittels einer Kühleinheit gekühlt werden. Als Orientierung einer einzustellenden Kühltemperatur kann die Temperatur der in einer Kühlung gekühlten und bevorrateten Milch dienen. Die Kühlung der Milch bzw. auch von Teilen der Vorrichtung kann ausgebildet sein, um auch das Fluid auf eine Temperatur von ≤ 7°C zu kühlen. Alternativ kann das Fluid in einer separaten Kühleinheit gekühlt werden, welche beispielsweise an der Fluidleitung anordenbar ist. Demnach kann vermieden werden, dass der erste Bezug eines kalten Getränks tatsächlich eine höhere Temperatur als gewünscht hat. Das gekühlte Fluid kann beispielsweise über eine in der zuführenden Fluidleitung angeordnete Kühleinheit gekühlt werden, so dass ein Spülen des Leitungssystems mit kaltem Fluid auch dann möglich ist, wenn beispielsweise bei hoher Umgebungstemperatur das Fluid in der Fluidleitung selbst schon erwärmt ist. Zur effizienten Temperierung des Fluids ist der Einsatz eines Latentwärmespeichers mit einem Phasenwechselmaterial (PCM) vorgesehen, welches in unterschiedlicher Form bekannt und einsetzbar ist. Das Phasenwechselmaterial kann zur Wärme- und Kältespeicherung und zur Begrenzung von Temperaturspitzen eingesetzt werden. Das Phasenwechselmaterial verfügt über ein hohes Speichervolumen, so dass die während eines Phasenwechsels gespeicherte latente Energie für ein Wärmemanagement genutzt werden kann. Die PCM-Technologie nutzt den Effekt, dass beim Übergang z.B. von fester zu flüssiger Phase, die Temperatur solange konstant bleibt, wie beide Aggregatzustände gleichzeitig vorhanden sind. Die dabei latent gespeicherte Energie steht bei dem umgekehrten Vorgang wieder zur Verfügung. Das PCM und insbesondere die Schmelztemperatur des Materials kann entsprechend den Einsatzbedingungen gewählt werden. Beispielsweise eignen sich für Kühlaufgaben wässrige Salzlösungen, wobei das Phasenwechselmaterial in geschlossenen Behältern, gebunden in Matrix- und/oder Trägerstrukturen und/oder mikroverkapselt eingesetzt werden kann.

So kann mit Einsatz der PCM-Technologie eine weitergehende Kühlung des Fluids bzw. des Leitungswassers erreicht werden. Das als Dickschichtheizung ausgebildete Heizelement kann demnach nicht nur auf die Temperatur des Leitungswassers, d.h. auf 10°C bis 25°C, gekühlt werden, sondern auch im eingeschalteten Zustand derart gekühlt werden, dass schneller eine Temperatur der Milch und/oder des Milchschaums von ≤ 7°C am Auslass erreichbar ist. Bei einer entsprechenden Auslegung der Kühlung können Temperaturen im Bereich von 4°C bis 7°C, insbesondere von ≤ 4°C, realisiert werden.

Besonders vorteilhaft ist es dabei, dass die Kühlung der bevorrateten Milch die PCM-Technologie nutzt, um damit auch das zur Beaufschlagung und Spülung genutzte Fluid, bzw. Leitungswasser, zu kühlen.

Das Spülen des Leitungssystems mit Fluid erfolgt bei einer Stellung einer in der Auslassleitung angeordneten und vorzugsweise als Mehrwegeventil ausgebildeten Ventilanordnung, welche ein Ausleiten des Fluids aus dem Leitungssystem gestattet. In einer anderen Stellung des Mehrwegeventils kann das Fluid im Kreislauf geführt werden. Das Mehrwegeventil ist mittels einer Steuereinheit schaltbar, wobei die Steuereinheit weitere Komponenten steuern kann. Die Steuereinheit kann ausgebildet sein, um je nach einer von einem Benutzer ausgehenden Anweisung das Verfahren zur Erzeugung von temperiertem Milchschaum und/oder Milch zu steuern.

Gemäss der Erfindung ist eine Vorrichtung zum Erzeugen wahlweise von kaltem, warmem und heissem Milchschaum und/oder Milch nach dem erfindungsgemässen Verfahren vorgeschlagen. Die Vorrichtung umfasst mindestens einen Behälter, in welchem eine zu schäumende Milch bevorratet ist, eine Pumpe, ein Leitungssystem, umfassend eine Milchansaugleitung, über welche der mindestens eine Behälter mit der Pumpe verbindbar ist und eine einzelne Auslassleitung, über welche die Pumpe mit mindestens einem Auslass verbindbar sind. Ferner ist eine Fluidleitung vorgesehen, über welche das Leitungssystem mit einem Fluid beaufschlagbar ist. Umfasst sind ferner ein Luftmengenregler, mittels welchem Luft dosierbar über eine Luftzufuhrleitung an einer Einleitungsstelle in die Milchansaugleitung zuführbar ist, ein als Durchlauferhitzer ausgebildetes Heizelement, welches in der Auslassleitung angeordnet und als Dickschichtheizung ausgebildet ist, und eine Drosseleinrichtung, welche stromabwärts der Pumpe in der Auslassleitung anordenbar ist. Desweiteren ist ein Latetntwärmespeicher mit einem Phasenwechselmaterial vorgesehen, welcher eingerichtet ist, um die Milch und/oder das Fluid auf eine Temperatur

Um Milchschaum aus einem Milch-/Luftgemisch zu erzeugen, kann stromabwärts der Pumpe und vorzugsweise stromabwärts des als Dickschichtheizung ausgebildeten Heizelements die Drosseleinrichtung in der Auslassleitung angeordnet sein. Die Drosseleinrichtung kann als feste oder einstellbare Düse oder Blende ausgebildet sein und umfasst insbesondere eine einstellbare Verengung der Durchflussquerschnittsfläche. Die Drosseleinrichtung ist eingerichtet, um einen Gegendruck zu erzeugen, welcher vorteilhaft in dem als Dickschichtheizung ausgebildeten Heizelement Wirkung zeigt. Der erzeugte Gegendruck wirkt einer mit zunehmender Temperatur stattfindenden Ausdehnung von Luftblasen in dem Milch-/Luftgemisch entgegen. Demnach werden grosse Luftblasen vermieden, welche nicht nur die Qualität und die Stabilität des Milchschaums reduzieren, sondern auch einen negativen Effekt auf die Wärmeübertragung haben, da Luft ein schlechter Wärmeleiter ist.

In einer Ausführungsform der Vorrichtung weist das als Dickschichtheizung ausgebildete Heizelement einen auf einem Träger aufgebrachten elektrischen Widerstand und einen mit dem Heizelement in Kontakt stehenden Fluidkanal auf.

Vorteilhaft kann die Vorrichtung zumindest teilweise in einer Kühleinrichtung angeordnet sein.

Ferner kann die Vorrichtung einen Leitwertsensor umfassen, welcher eingerichtet ist, um einen Leitwert eines in dem Leitungssystem befindlichen Mediums zu bestimmen. Anhand des Leitwertes ist ermittelbar, um welches Medium es sich handelt, insbesondere um Milch, Milch-/Luftgemisch, Fluid oder Luft.

Gemäss einer Ausführungsform ist in der Auslassleitung ein Mehrwegeventil vorgesehen, welches die Auslassleitung wahlweise mit einem Ausguss zum Ausleiten von Fluid, mit einer Kreislaufleitung, um Fluid im Kreislauf durch das Leitungssystem zu führen oder mit dem mindestens einen Auslass zu verbinden, an dem Milchschaum und/oder Milch bezogen werden kann. Dabei kann der mindestens eine Auslass als eine Auslassdüse ausgebildet sein. Ein Leitungsabschnitt zwischen Mehrwegeventil und dem mindestens einen Auslass kann derart dimensioniert sein, dass dieser nur ein kleines Füllvolumen aufweist, beispielsweise von etwa 2 bis 3 ml.

In einer Ausführungsform der Erfindung ist darüber hinaus vorgesehen, dass in der Luftzufuhrleitung ein erstes Rückschlagventil und ein zweites Rückschlagventil angeordnet sind. Zwischen dem ersten Rückschlagventil und dem zweiten Rückschlagventil ist über ein erstes Ventil R1 Fluid in die Luftzuführleitung zuführbar. Demnach ist in der Fluidleitung in einem Strömungsweg zu der Luftzufuhrleitung das von der Steuereinheit regelbare erste Ventil R1 vorgesehen. Das erste Rückschlagventil und das zweite Rückschlagventil sind vorzugsweise unabhängig voneinander schaltbar.

Vorzugsweise sind das erste Rückschlagventil und das zweite Rückschlagventil als direkt schliessende Rückschlagventile ausgebildet, welche in einer vertikalen Orientierung in der Luftzufuhrleitung anordenbar sind, so dass diese von oben nach unten durchströmbar sind. Direkt schliessende Rückschlagventile umfassen im Allgemeinen ein Schliesselement, welches durch ein Medium und/oder aufgrund der Schwerkraft in seinen Sitz gedrückt werden kann. Verzögerungen und Vibrationen beim Schliessvorgang sind reduzierbar. Demnach kann mittels der vertikalen Orientierung von dem ersten Rückschlagventil und dem zweiten Rückschlagventil in der Luftzuführleitung eine exakte Dosierung der Luftmenge mittels des ebenfalls in der Luftzuführleitung angeordneten Luftmengenreglers erreicht werden. Mit dieser Anordnung kann das zugeführte Fluid gegebenenfalls auch genutzt werden, um zumindest Teile der Luftzuführleitung zu spülen, welches vorteilhaft im Hinblick auf eine exakte Luftmengendosierung ist.

Alternativ oder zusätzlich kann vorgesehen sein, dass das Fluid über die Fluidleitung in die Milchansaugleitung zuführbar ist, um weitgehend die Milch bzw. das Milch-/Luftgemisch oder den Milchschaum führende Abschnitte des Leitungssystems mit dem Fluid zu beaufschlagen bzw. zu spülen. Hierbei ist ein von einer Steuereinheit regelbares zweites Ventil R2 in der Fluidleitung vorgesehen, welches die Einleitung des Fluids in die Milchansaugleitung steuert.

Insbesondere handelt es sich bei dem Fluid um Wasser, welches über eine Wasserleitung zur Verfügung gestellt werden kann. Da je nach Umgebungstemperatur und Saison das in einer Wasserleitung geführte Wasser bereits eine höhere Temperatur haben kann, z.B. wird in den Sommermonaten zunächst Wasser von mehr als 20°C aus der Wasserleitung bezogen, kann in einer Ausführungsform der Erfindung eine Kühleinheit vorgesehen sein, mittels welcher das Fluid auf eine tiefe Temperatur, insbesondere auf eine Temperatur ≤ 7°C gekühlt werden kann.

Mit dem erfindungsgemässen Verfahren und der erfindungsgemässen Vorrichtung zum Erzeugen von wahlweise kaltem, warmem oder heissem Milchschaum und/oder Milch kann das als Dickschichtheizung ausgebildete Heizelement stets in einem aktivierten Zustand gehalten werden, zumindest dann wenn ein damit in Verbindung stehender Getränkeaufbereiter ebenfalls im Betrieb ist. Da zwischen zwei Milch- bzw. Milchschaumbezügen das Leitungssystem und der als Dickschichtheizung ausgebildete Durchlauferhitzer mit dem Fluid beaufschlagt sind, kann die Dickschichtheizung stets in einem Stand-by-Modus und bei einer hohen Temperatur gehalten werden, so dass nur kurze Aufheizphasen bzw. Abkühlphasen der Dickschichtheizung, wenn erforderlich, zu berücksichtigen sind.

### Kurzbeschreibung der Zeichnungen

Ein Ausführungsbeispiel der Erfindung wird nachfolgend anhand einer Zeichnung näher erläutert. Es zeigt:

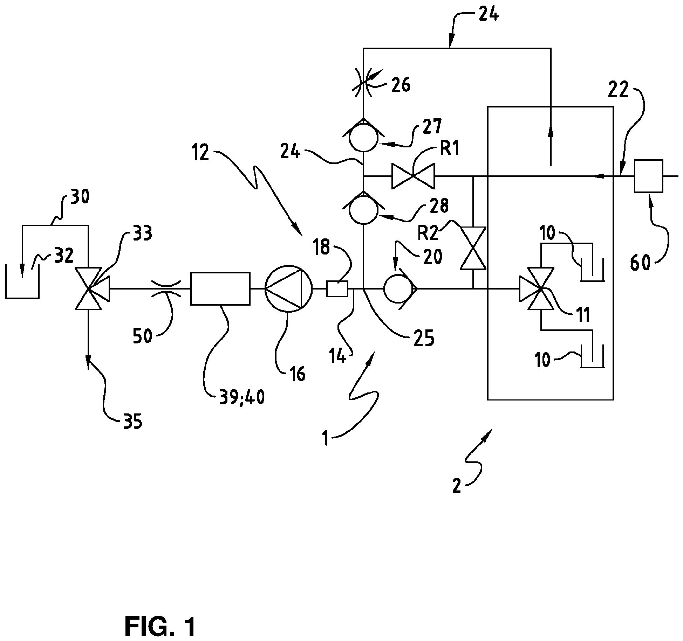

Figur 1 schematisch eine erfindungsgemässe Vorrichtung zur Erzeugung wahlweise von kaltem, warmem oder heissem Milchschaum und/oder Milch.

### Detaillierte Beschreibung einer bevorzugten Ausführungsform

Die in Figur 1 schematisch dargestellte Ausführungsform einer erfindungsgemässen Vorrichtung 1 ist eingerichtet, um wahlweise kalten, warmen oder heissen Milchschaum und/oder Milch zu erzeugen. Die zu schäumende Milch oder eine andere zu schäumende Flüssigkeit, ist in einem Behälter 10 bevorratet, welcher vorzugsweise in einer Kühlung 2 vorgesehen ist. Vorzugsweise kann die Kühlung 2 derart ausgebildet sein, dass die Vorrichtung 1 zumindest teilweise in dieser untergebracht sein kann. Da heute eine Vielzahl von Milcharten zur Verfügung stehen, können mehrere Vorratsbehälter 10 vorgesehen sein, in welchen jeweils ein Milchtyp bevorratet sein kann. Von dem mindestens einen Behälter 10 führt eine in einem Leitungssystem 12 umfasste Milchansaugleitung 14 zu einer Saugseite einer Pumpe 16, um so Milch aus dem mindestens einen Behälter 10 anzusaugen, wenn ein entsprechend vorgesehenes Absperrventil 11 den Strömungsweg öffnet.

In der Milchansaugleitung 14 ist in dem dargestellten Ausführungsbeispiel ein Leitwertsensor 18 angeordnet, welcher eingerichtet ist, um mittels der Messung eines Leitwertes den Typ eines in der Milchansaugleitung 14 geführten Mediums zu ermitteln, d.h. ob es sich um Milch, Fluid bzw. Wasser, Spüllösung oder um Luft handelt.

Ferner ist in der Milchansaugleitung 14 ein Ventil 20 angeordnet, welches die Milchansaugleitung 14 in Richtung der Saugseite der Pumpe 16 öffnet und als ein Rückschlagventil ausgebildet ist.

Stromaufwärts des Ventils 20 mündet in die Milchansaugleitung 14 eine Fluidleitung 22, über welche ein Fluid zuführbar ist. Insbesondere ist das Fluid Wasser, welches vorzugsweise mit einer bestimmbaren Temperatur das Leitungssystem 12 beaufschlagt. Unter Beaufschlagung kann sowohl ein Befüllen und Halten als auch ein Spülen verstanden werden. Das Fluid, welches mittels der durch ein zweites Ventil R2 absperrbaren Fluidleitung 22 in die Milchansaugleitung 14 einleitbar ist, kann vorzugsweise durch eine nicht dargestellte Steuereinheit geregelt zwischen zwei Bezügen von Milch und/oder Milchschaum in die Vorrichtung 1 eingebracht werden und insbesondere darin verbleiben bis ein erneuter Bezug von Milchschaum und/oder Milch angefordert wird.

Auf der Saugseite der Pumpe 16 umfasst das Leitungssystem 12 ferner eine Luftzufuhrleitung 24, um Luft dosiert und geregelt in die Milchansaugleitung 14 an einer Einleitungsstelle 25 einzuleiten. Hierfür ist ein Luftmengenregler 26 vorgesehen, beispielsweise als Proportionalventil ausgebildet. Hiermit kann eine exakt bestimmbare Luftmenge in das Leitungssystem 12 eingeleitet bzw. der geförderten Milch beigemischt werden, so dass in der Milchansaugleitung 14 stromabwärts der Einleitungsstelle 25 ein Milch-/Luftgemisch vorliegt, welches von der Pumpe 16 gefördert wird.

In Figur 1 ist dargestellt, dass in der Luftzufuhrleitung 24 ein erstes Rückschlagventil 27 und ein zweites Rückschlagventil 28 vorgesehen sind. Das erste Rückschlagventil 27 und/oder das zweite Rückschlagventil 28 können als direkt schliessende Rückschlagventile ausgebildet und in einer vertikalen Orientierung angeordnet sein, so dass die auf ein umfasstes Schliessorgan wirkende Schwerkraft ein Öffnen des ersten Rückschlagventils 27 und/oder des zweiten Rückschlagventils 28 unterstützt. Demnach öffnet die Luftzufuhrleitung 24 auch dann, wenn der erzeugte Unterdruck für die Luftansaugung eventuell nicht ganz ausreichend ist.

Zwischen dem ersten Rückschlageventil 27 und dem zweiten Rückschlagventil 28 mündet ein Abschnitt der Fluidleitung 22, so dass bei einem in diesem Abschnitt geöffneten ersten Ventil R1 Fluid in die Luftzufuhrleitung 24 eingebracht wird und so auch diesen Abschnitt des Leitungssystems 12 spülen kann. Um das Fluid zu kühlen, welches mittels der Fluidleitung 22 in das Leitungssystem einleitbar ist, kann eine Kühleinheit 60 vorgesehen sein. Die Kühleinheit 60 ist als Latentwärmespeicher mit einem Phasenwechselmaterial (PCM) ausgebildet sein. Mittels der dabei zum Einsatz kommenden PCM-Technologie kann durch ein Versorgungsnetz bereitgestelltes Leitungswasser bis auf eine Temperatur ≤ 7°C gekühlt werden. Demnach ist die Temperatur des Fluids, insbesondere des Leitungswassers, unabhängig von Umgebungstemperatur und Temperatur des Leitungswassers im Versorgungsnetz einstellbar. Die Kühlung 2 für die Milch und Teilen der Vorrichtung 1 ist als Latentwärmespeicher mit PCM ausgebildet, um das Fluid entsprechend zu kühlen.

Die Pumpe 16 ist auf ihrer Druckseite über eine einzige Auslassleitung 30 mit einem Auslass 32 verbunden, an welchem aufbereitete Milch und/oder aufbereiteter Milchschaum abgegeben werden kann. Stromaufwärts des Auslasses 32 ist ein Mehrwegeventil 33 angeordnet, um wahlweise eine Strömung in Richtung Auslass 32 oder in Richtung eines Ausgusses 35 vorzusehen. In einer weiteren Stellung des Mehrwegeventils 33 kann auch eine Kreislaufspülung ermöglicht werden.

Stromabwärts der Pumpe 16 ist in der Auslassleitung 30 ein Durchlauferhitzer vorgesehen, welcher eine als Dickschichtheizung 40 ausgebildetes Heizelement 39 ist. Das Heizelement 39 umfasst einen auf einem Träger aufgebrachten elektrischen Heizwiderstand und einen Fluidkanal, welcher von einem zu erwärmenden Fluid durchströmbar ist. Erfindungsgemäss ist vorgesehen, dass sich das als Dickschichtheizung 40 ausgebildete Heizelement 39 permanent in einem aktiven Zustand befindet und somit stets auf eine Temperatur von beispielsweise ca. 60°C bis 70°C erwärmt ist. Ferner ist vorgesehen, dass zwischen zwei Bezügen von Milchschaum und/oder Milch am Auslass 32, das Leitungssystem 12 mit dem Fluid beaufschlagt ist. Die Beaufschlagung mit dem Fluid bewirkt, dass zwischen zwei Bezügen von Milchschaum und/oder Milch das Leitungssystem 12 zumindest teilweise mit Fluid gefüllt ist. Die Befüllung des Leitungssystems 12 und der Dickschichtheizung 40 reduziert die Gefahr einer Überhitzung und erlaubt, dass der sich von der Dickschichtheizung 40 erstreckende Abschnitt der Auslassleitung 30 sowie die daran angeordneten Komponenten, z.B. der Auslass 32, erwärmen.

Ferner ist in der Auslassleitung 30 insbesondere stromabwärts der Dickschichtheizung 40 eine Drosseleinrichtung 50 angeordnet, welche vorzugsweise mittels einer (nicht dargestellten) Steuereinheit einstellbar ist. Mittels der Drosseleinrichtung 50 kann die Stabilität und Qualität des erzeugten Milchschaums positiv beeinflusst werde.

Jeweils vor dem Bezug von temperiertem Milchschaum und/oder Milch an dem Auslass 32 wird das Fluid aus dem Leitungssystem 12 über das Mehrwegeventil 33 ausgeleitet. Um warmen Milchschaum und/oder warme Milch zu erzeugen, wird entsprechend das Milch-/Luftgemisch oder die Milch durch das erwärmte Heizelement 39 und dem erwärmten Abschnitt der Auslassleitung 30 geleitet. Um beispielsweise heissen Milchschaum und/oder Milch zu erzeugen, kann die Temperatur der Dickschichtheizung 40 um eine geringe Temperaturdifferenz erhöht werden, so dass das durchströmende Milch-/Luftgemisch und/oder die Milch so erwärmt werden kann, dass am Auslass 32 diese eine Temperatur im Bereich von ca. 64°C bis 68°C aufweist. Eine Abkühlung des Milchschaums und/oder der Milch in dem Leitungssystem 12 wird durch den temperierten Strömungsweg deutlich reduziert. Dabei können auch kleine Mengen an Milch-/Luftgemisch oder Milch in einer sehr kurzen Zeitspanne auf die richtige Temperatur gebracht werden.

Zum Erzeugen von kaltem Milchschaum und/oder kalter Milch ist es mit der erfindungsgemässen Vorrichtung und dem Verfahren nicht mehr erforderlich das als Dickschichtheizung 40 ausgebildete Heizelement 39 auszuschalten und das thermische Verhalten desselben zu berücksichtigen. Vielmehr ist vorgesehen, dass bei geöffnetem Mehrwegeventil 33 das in dem Leitungssystem befindliche Fluid ausgeleitet wird und kaltes bzw. mittels einer Kühleinheit 60 gekühltes Fluid mittels der Pumpe 16 über die Fluidleitung 22 in das Leitungssystem 12 gesaugt und in diesem gefördert wird, so dass durch das in dem Fluidkanal der Dickschichtheizung 40 strömende kühle Fluid dieser soweit gekühlt wird, dass nachfolgendes Milch-/Luftgemisch oder Milch trotz eingeschalteter Dickschichtheizung 40 nicht oder nur geringfügig erwärmt wird.

## Patentansprüche

1. Verfahren zum Erzeugen wahlweise von kaltem, warmem oder heissem Milchschaum und/oder Milch, umfassend die folgenden Schritte:
▪ Bereitstellen mindestens eines Behälters (10) zum Bevorraten einer zu schäumenden Milch;
▪ Bereitstellen eines Fluids und einer Fluidleitung (22);
▪ Fördern einer vorbestimmbaren Menge der zu schäumenden Milch mittels einer Pumpe (16) durch ein Leitungssystem (12), welches eine Milchansaugleitung (14) zwischen dem mindestens einen Behälter (10) und der Pumpe (16) und eine Auslassleitung (30) zwischen der Pumpe (16) und mindestens einem Auslass (32) umfasst;
▪ Eventuelles Zuführen von Luft über einen in einer Luftzufuhrleitung (24) anordenbaren Luftmengenregler (26) in die Milchansaugleitung (14) zum Erzeugen eines Milch-/Luftgemisches stromaufwärts der Pumpe (16);
▪ Fördern des Milch-/Luftgemisches oder der Milch durch ein als Durchlauferhitzer ausgebildetes Heizelement (39), welches in der Auslassleitung (30) angeordnet und als Dickschichtheizung (40) ausgebildet ist;
▪ Erzeugen eines Milchschaums aus dem Milch-Luftgemisch mittels einer Drosseleinrichtung (50); und
▪ Abgeben des Milchschaums oder der Milch an dem mindestens einen Auslass (32),
**dadurch gekennzeichnet, dass** die Dickschichtheizung (40) permanent auf eine vorbestimmbare Temperatur aufgeheizt ist, und nach jeder Abgabe des Milchschaums oder der Milch das Leitungssystem (12) mit dem Fluid zumindest teilweise beaufschlagt ist.

2. Verfahren zum Erzeugen wahlweise von kaltem, warmem oder heissem Milchschaum und/oder Milch gemäss Anspruch 1, **dadurch gekennzeichnet, dass** vor einer Abgabe von Milchschaum oder Milch an dem Auslass (32) das Fluid aus dem Leitungssystem (12) über ein Mehrwegeventil (33) ausgeleitet wird.

3. Verfahren zum Erzeugen wahlweise von kaltem, warmem oder heissem Milchschaum und/oder Milch gemäss Anspruch 1 oder 2, **dadurch gekennzeichnet, dass** das Fluid Wasser ist.

4. Verfahren zum Erzeugen wahlweise von kaltem, warmem oder heissem Milchschaum und/oder Milch gemäss einem der vorhergehenden Ansprüche, **dadurch gekennzeichnet, dass** die Dickschichtheizung (40) auf eine Temperatur zwischen 60°C und 70°C permanent erwärmt ist.

5. Verfahren zum Erzeugen wahlweise von kaltem, warmem oder heissem Milchschaum und/oder Milch gemäss Anspruch 4, **dadurch gekennzeichnet, dass** zum Erzeugen heissen Milchschaums und/oder Milch die Temperatur der Dickschichtheizung (40) um etwa 4°C bis 7°C erhöht wird.

6. Verfahren zum Erzeugen wahlweise von kaltem, warmem oder heissem Milchschaum und/oder Milch gemäss einem der vorhergehenden Ansprüche, **dadurch gekennzeichnet, dass** zum Erzeugen kalten Milchschaums und/oder kalter Milch das Leitungssystem (12) und die Dickschichtheizung (40) mit Fluid gespült werden, so dass die Dickschichtheizung (40) durch das durchströmende Fluid in einem Zeitraum > 10 s auf eine Temperatur von ≤ 7°C gekühlt wird.

7. Verfahren zum Erzeugen wahlweise von kaltem, warmem oder heissem Milchschaum und/oder Milch gemäss Anspruch 6, **dadurch gekennzeichnet, dass** das zuführbare Fluid eine Temperatur von ≤ 7°C aufweist.

8. Verfahren zum Erzeugen wahlweise von kaltem, warmem oder heissem Milchschaum und/oder Milch gemäss Anspruch 7, **dadurch gekennzeichnet, dass** das zuführbare Fluid mittels einer als Latentwärmespeicher mit einem Phasenwechselmaterial ausgebildeten Kühleinheit (60) auf die Temperatur ≤ 7°C gekühlt ist.

9. Verfahren zum Erzeugen wahlweise von kaltem, warmem oder heissem Milchschaum und/oder Milch gemäss einem der vorhergehenden Ansprüche, **dadurch gekennzeichnet, dass** eine Steuereinheit das Verfahren gemäss einer von einem Benutzer erzeugten Anweisung steuert.

10. Vorrichtung (1) zum Erzeugen wahlweise von kaltem, warmem oder heissem Milchschaum und/oder Milch gemäss dem Verfahren nach einem der vorhergehenden Ansprüche, umfassend
▪ mindestens einen Behälter (10), in welchem eine zu schäumende Milch bevorratet ist,
▪ eine Pumpe (16),
▪ ein Leitungssystem (12), umfassend
o eine Milchansaugleitung (14), über welche der mindestens eine Behälter (10) mit der Pumpe (16) verbindbar ist, und
o eine Auslassleitung (30), über welche die Pumpe (16) mit mindestens einem Auslass (32) verbindbar sind, und
▪ eine Fluidleitung (22), über welche das Leitungssystem (12) mit einem Fluid beaufschlagbar ist,
▪ einem Luftmengenregler (26), mittels welchem Luft dosierbar über eine Luftzufuhrleitung (24) an einer Einleitungsstelle (25) in die Milchansaugleitung (14) zuführbar ist,
▪ ein als Durchlauferhitzer ausgebildetes Heizelement (39), welches in der Auslassleitung (30) angeordnet und als Dickschichtheizung (40) ausgebildet ist,
▪ eine Drosseleinrichtung (50), welche stromabwärts der Pumpe (16) in der Auslassleitung (30) anordenbar ist,
**dadurch gekennzeichnet, dass** ein Latentwärmespeicher mit einem Phasenwechselmaterial zur Temperierung von Milch und/oder Fluid vorgesehen ist.

11. Vorrichtung (1) zum Erzeugen wahlweise von kaltem, warmem oder heissem Milchschaum und/oder Milch gemäss Anspruch 10, **dadurch gekennzeichnet, dass** die Dickschichtheizung (40) einen auf einem Träger aufgebrachten elektrischen Widerstand und einen mit dem Heizelement (39) in Kontakt stehenden Fluidkanal umfasst.

12. Vorrichtung (1) zum Erzeugen wahlweise von kaltem, warmem oder heissem Milchschaum und/oder Milch nach Anspruch 10 oder 11, **dadurch gekennzeichnet, dass** die Vorrichtung (1) zumindest teilweise in einer Kühlung (2) anordenbar ist.

13. Vorrichtung (1) zum Erzeugen wahlweise von kaltem, warmem oder heissem Milchschaum und/oder Milch nach Anspruch 10 bis 12, **dadurch gekennzeichnet, dass** der Latentwärmespeicher eingerichtet ist, um die Milch und/oder das Fluid auf eine Temperatur ≤ 7°C zu kühlen.

14. Vorrichtung (1) zum Erzeugen wahlweise von kaltem, warmem oder heissem Milchschaum und/oder Milch gemäss Anspruch 10 bis 13, **dadurch gekennzeichnet, dass** zum Bestimmen eines Leitwertes einer in dem Leitungssystem befindlichen Mediums ein Leitwertsensor (18) vorgesehen ist.

15. Vorrichtung (1) zum Erzeugen wahlweise von kaltem, warmem oder heissem Milchschaum und/oder Milch gemäss einem der Ansprüche 10 bis 14, **dadurch gekennzeichnet, dass** in der Auslassleitung (30) ein Mehrwegeventil (33) vorgesehen ist, welches die Auslassleitung (30) wahlweise mit einem Ausguss (35) zum Ausleiten des Fluids, mit einer Kreislaufleitung, um das Fluid im Kreislauf zu führen oder mit dem mindestens einen Auslass (32) zu verbinden, an dem Milchschaum oder Milch bezogen werden kann.

16. Vorrichtung (1) zum Erzeugen wahlweise von kaltem, warmem oder heissem Milchschaum und/oder Milch gemäss einem der Ansprüche 10 bis 15, **dadurch gekennzeichnet, dass** in der Luftzufuhrleitung (24) in einer vertikalen Orientierung und von oben nach unten durchströmbar ein erstes Rückschlagventil (27) und ein zweites Rückschlagventil (28) angeordnet sind, wobei diese als direkt schliessende Rückschlagventile ausgebildet sind, und zwischen dem ersten Rückschlagventil (27) und dem zweiten Rückschlagventil (28) über ein Ventil R2 Fluid in die Luftzufuhrleitung (24) einleitbar ist.

## Claims

1. Method for selectively producing cold, warm or hot milk foam and/or milk, the method comprising the following steps:
▪ providing at least one container (10) for storing milk to be foamed;
▪ providing a fluid and a fluid line (22);
▪ conveying, by means of a pump (16), a predefinable amount of the milk to be foamed through a line system (12), which comprises a milk intake line (14), between the at least one container (10) and the pump (16), and an outlet line (30), between the pump (16) and at least one outlet (32);
▪ potentially supplying air into the milk intake line (14) via an air-flow regulator (26), which can be arranged in an air-supply line (24), in order to produce a milk/air mixture upstream of the pump (16);
▪ conveying the milk/air mixture or the milk through a heating element (39), which is designed as a flow heater and is arranged in the outlet line (30) and is in the form of a thick-film heating element (40);
▪ producing a milk foam from the milk/air mixture by means of a throttle device (50); and
▪ dispensing the milk foam or milk at the at least one outlet (32),
**characterized in that** the thick-film heating element (40) is permanently heated to a predefinable temperature, and after each action of dispensing of the milk foam or the milk, fluid is applied to the line system (12) at least in part.

2. Method for selectively producing cold, warm or hot milk foam and/or milk according to claim 1, **characterized in that** before a dispensing of milk foam or milk at the outlet (32) the fluid is conveyed out of the line system (12) via a manifold valve (33).

3. Method for selectively producing cold, warm or hot milk foam and/or milk according to claim 1 or 2, **characterized in that** the fluid is water.

4. Method for selectively producing cold, warm or hot milk foam and/or milk according to one of the preceding claims, **characterized in that** the thick-film heating element (40) is permanently heated to a temperature between 60°C and 70°C.

5. Method for selectively producing cold, warm or hot milk foam and/or milk according to claim 4, **characterized in that** for producing hot milk foam and/or milk the temperature of the thick-film heating element (40) is increased by about 4°C to 7°C.

6. Method for selectively producing cold, warm or hot milk foam and/or milk according to one of the preceding claims, **characterized in that** for producing cold milk foam and/or cold milk the line system (12) and the thick-film heating element (40) is rinsed with fluid, so that the thick-film heating element (40) is cooled by the fluid flowing through in a time period of > 10 s to a temperature of ≤ 7°C.

7. Method for selectively producing cold, warm or hot milk foam and/or milk according to claim 6, **characterized in that** the feedable fluid has a temperature of ≤ 7°C.

8. Method for selectively producing cold, warm or hot milk foam and/or milk according to claim 7, **characterized in that** the feedable fluid is cooled to the temperature ≤ 7°C by means of a cooling unit (60) designed as a latent heat accumulator with a phase-change material.

9. Method for selectively producing cold, warm or hot milk foam and/or milk according to one of the preceding claims, **characterized in that** a control unit controls the method according to an instruction generated by a user.

10. Apparatus (1) for selectively producing cold, warm or hot milk foam and/or milk according to the method according to one of the preceding claims, comprising
▪ at least one container (10), in which milk to be foamed is stored,
▪ a pump (16),
▪ a line system (12), comprising
o a milk intake line (14), via which the at least one container (10) is connectible to the pump (16), and
o an outlet line (30), via which the pump (16) is connectible to at least one outlet (32), and
▪ a fluid line (22), via which fluid is able to be applied to the line system (12),
▪ an air-flow regulator (26), by means of which air is able to be conveyed in a metered way via an air-supply line (24) at an inlet point (25) into the milk intake line (14),
▪ a heating element (39) designed as a flow heater, which is arranged in the outlet line (30) and designed as a thick-film heating element (40),
▪ a throttle device (50) which is able to be arranged downstream of the pump (16) in the outlet line (30),
▪ **characterized in that** a latent heat accumulator with a phase-change material is provided for temperature controlling of milk and/or fluid.

11. Apparatus (1) for selectively producing cold, warm or hot milk foam and/or milk according to claim 10, **characterized in that** the thick-film heating element (40) comprises an electrical resistor installed on a support and a fluid channel in contact with the heating element (39).

12. Apparatus (1) for selectively producing cold, warm or hot milk foam and/or milk according to claim 10 or 11, **characterized in that** the apparatus (1) is able to be arranged at least partially in a cooling system (2).

13. Apparatus (1) for selectively producing cold, warm or hot milk foam and/or milk according to claim 10 to 12, **characterized in that** the latent heat accumulator is arranged to cool the milk and/or the fluid to a temperature ≤ 7°C.

14. Apparatus (1) for selectively producing cold, warm or hot milk foam and/or milk according to claim 10 bis 13, **characterized in that** a conductance sensor (18) is provided for determining a conductance of a medium in the line system.

15. Apparatus (1) for selectively producing cold, warm or hot milk foam and/or milk according to one of the claims 10 to 14, **characterized in that** a manifold valve (33) is provided in the outlet line (30), which manifold valve connects the outlet line (30) selectively to a drain (35) for discharging the fluid, to a circuit line for conducting the fluid in the circuit or to at least one outlet (32) at which milk foam or milk can be dispensed.

16. Apparatus (1) for selectively producing cold, warm or hot milk foam and/or milk according to one of the claims 10 to 15, **characterized in that** a first non-return valve (27) and a second non-return valve (28) are arranged in the air-supply line (24) in a vertical orientation and so that flow can pass through them from top to bottom, these being designed as directly closing non-return valves, and fluid can be introduced into the air-supply line (24) between the first non-return valve (27) and the second non-return valve (28) via a valve R2.

## Revendications

1. Procédé de production sélective de mousse de lait et/ou de lait froid, chaud ou tiède, comprenant les étapes suivantes :
- la fourniture d'au moins un récipient (10) pour le stockage du lait à faire mousser ;
- la fourniture d'un fluide et d'une conduite de fluide (22) ;
- le transport, au moyen d'une pompe (16), d'une quantité prédéfinie de lait à faire mousser à travers un système de conduites (12), qui comprend une conduite d'admission du lait (14), entre le au moins un récipient (10) et la pompe (16), et une conduite de sortie (30), entre la pompe (16) et au moins un orifice de sortie (32);
- l'alimentation potentielle en air de la conduite d'admission du lait (14) par l'intermédiaire d'un régulateur de débit d'air (26), qui peut être disposé dans une conduite d'alimentation en air (24), afin de produire un mélange lait/air en amont de la pompe (16) ;
- le transport du mélange lait/air ou du lait à travers un élément chauffant (39), conçu comme un réchauffeur de flux, disposé dans la conduite de sortie (30) et se présentant sous la forme d'un élément chauffant à couche épaisse (40) ;
- la production d'une mousse de lait à partir du mélange lait/air au moyen d'un dispositif d'étranglement (50) ; et
- la distribution de mousse de lait ou de lait au niveau d'au moins une sortie (32),
**caractérisé par le fait que** l'élément chauffant à couche épaisse (40) est chauffé en permanence à une température prédéfinie et qu'après chaque action de distribution de la mousse de lait ou du lait, le fluide est appliqué au moins en partie au système de canalisation (12).

2. Procédé de production sélective de mousse de lait et/ou de lait froid, tiède ou chaud selon la revendication 1, **caractérisé par le fait qu'**avant la distribution de mousse de lait ou de lait à la sortie (32), le fluide est acheminé hors du système de canalisation (12) par l'intermédiaire d'une vanne de collecteur (33).

3. Procédé de production sélective de mousse de lait froide, chaude ou tiède et/ou de lait selon la revendication 1 ou 2, **caractérisée par le fait que** le fluide est de l'eau.

4. Procédé de production sélective de mousse de lait froide, tiède ou chaude et/ou de lait selon l'une des revendications précédentes, **caractérisé par le fait que** l'élément chauffant à couche épaisse (40) est chauffé en permanence à une température comprise entre 60°C et 70°C.

5. Procédé de production sélective de mousse de lait et/ou de lait froid, tiède ou chaud selon la revendication 4, **caractérisé par le fait que** pour produire de la mousse de lait et/ou du lait chaud, la température de l'élément chauffant à couche épaisse (40) est augmentée d'environ 4°C à 7°C.

6. Procédé de production sélective de mousse de lait et/ou de lait froid, tiède ou chaud selon l'une des revendications précédentes, **caractérisé en ce que**, pour la production de mousse de lait froid et/ou de lait froid, le système de ligne (12) et l'élément chauffant à couche épaisse (40) sont rincés avec un fluide, de telle sorte que l'élément chauffant à couche épaisse (40) est refroidi par le fluide circulant dans un laps de temps de > 10 s à une température de ≤ 7°C.

7. Procédé de production sélective de mousse de lait et/ou de lait froid, tiède ou chaud selon la revendication 6, **caractérisé par le fait que** ledit fluide utilisé possède une température de ≤ 7°C.

8. Procédé de production sélective de mousse de lait et/ou de lait froid, tiède ou chaud selon la revendication 7, **caractérisé par le fait que** ledit fluide est refroidi à la température ≤ 7°C au moyen d'une unité de refroidissement (60) conçue comme un accumulateur de chaleur latente avec un matériau à changement de phase.

9. Procédé de production sélective de mousse de lait et/ou de lait froid, tiède ou chaud selon l'une des revendications précédentes, **caractérisé par le fait qu'**une unité de commande contrôle le procédé en fonction d'une instruction générée par un utilisateur.

10. Appareil (1) pour produire sélectivement de la mousse de lait froide, tiède ou chaude et/ou du lait selon la méthode décrite dans l'une des revendications précédentes, comprenant
- au moins un récipient (10) dans lequel est stocké le lait à faire mousser,
- une pompe (16) ;
- un système de conduites (12) comprenant
- une conduite d'admission du lait (14), par laquelle le conteneur au moins (10) est relié à la pompe (16), et
- une conduite de sortie (30), par laquelle la pompe (16) est connectée à au moins une sortie (32), et
- une conduite de fluide (22), par laquelle le fluide peut être appliqué au système de conduites (12),
- un régulateur de débit d'air (26), qui permet d'acheminer de l'air de manière dosée via une conduite d'alimentation en air (24) à un point d'entrée (25) dans la conduite d'admission du lait (14),
- un élément chauffant (39) conçu comme un réchauffeur de flux, disposé dans la conduite de sortie (30) et conçu comme un élément chauffant à couche épaisse (40),
- un dispositif d'étranglement (50) qui peut être placé en aval de la pompe (16) dans la conduite de sortie (30),
**caractérisé par le fait qu'**un accumulateur de chaleur latente avec un matériau à changement de phase est prévu pour contrôler la température du lait et/ou du fluide.

11. Appareil (1) pour produire sélectivement de la mousse de lait et/ou du lait froid, tiède ou chaud selon la revendication 10, **caractérisé en ce que** l'élément chauffant à couche épaisse (40) comprend une résistance électrique installée sur un support et un canal de fluide en contact avec l'élément chauffant (39).

12. Appareil (1) pour produire sélectivement de la mousse de lait et/ou du lait froid, tiède ou chaud selon la revendication 10 ou 11, **caractérisé par le fait que** l'appareil (1) peut être disposé au moins partiellement dans un système de refroidissement (2).

13. Appareil (1) pour produire sélectivement de la mousse de lait froide, tiède ou chaude et/ou du lait selon les revendications 10 à 12, **caractérisé en ce que** l'accumulateur de chaleur latente est agencé pour refroidir le lait et/ou le fluide à une température ≤ 7°C.

14. Appareil (1) pour produire sélectivement de la mousse de lait et/ou du lait froid, tiède ou chaud selon les revendications 10 à 13, **caractérisé par** la présence d'un capteur de conductance (18) pour déterminer la conductance d'un fluide dans le système de canalisation.

15. Appareil (1) pour produire sélectivement de la mousse de lait et/ou du lait froid, tiède ou chaud selon l'une des revendications 10 à 14, **caractérisé en ce qu'**une vanne de collecteur (33) est prévue dans la conduite de sortie (30), laquelle vanne de collecteur relie la conduite de sortie (30) sélectivement à un drain (35) pour évacuer le fluide, à une conduite de circuit pour conduire le fluide dans le circuit ou à au moins une sortie (32) à laquelle la mousse de lait ou le lait peut être distribué.

16. Appareil (1) pour la production sélective de mousse de lait et/ou de lait froid, tiède ou chaud selon l'une des revendications 10 à 15, **caractérisé en ce qu'**un premier clapet anti-retour (27) et un second clapet anti-retour (28) sont disposés dans la conduite d'alimentation en air (24) dans une orientation verticale et de manière à ce que le flux puisse les traverser de haut en bas, ceux-ci étant conçus comme des clapets anti-retour à fermeture directe, et le fluide peut être introduit dans la conduite d'alimentation en air (24) entre le premier clapet anti-retour (27) et le second clapet anti-retour (28) par l'intermédiaire d'une vanne R2.
